# EUROPEAN PATENT SPECIFICATION

(11) **EP 0 749 904 B1**
(45) Date of publication and mention of the grant of the patent: **02.06.1999**
(21) Application number: 96115280.8
(22) Date of filing: 11.04.1994
(51) Int. Cl.: B65B 61/18, B31B 1/84

(54) **CONTAINER FITMENT APPLICATOR AND CORRESPONDING METHOD**
VORRICHTUNG UND VERFAHREN ZUM ANBRINGEN VON AUSGIESSERN
APPLICATEUR DE BECS VERSEURS ET METHODE CORRESPONDANTE

(30) Priority: 12.04.1993 US 45347
(43) Date of publication of application: 27.12.1996
(62) Divisional of application: 94302511.4
(73) Proprietor: ELOPAK SYSTEMS AG, 8152 Glattbrugg (CH)
(72) Inventor: Owen, Barry Charles, Southfield, Michigan 48076 (US); Pape, Leslie, Novi, Michigan 48375 (US)
(74) Representative: Burrows, Anthony Gregory

(56) References cited:
- US-A- 4 456 118
- US-A- 4 512 136

## Description

This invention relates to a container fitment applicator and is applicable particularly, but not exclusively, to carton forming, filling and sealing machines, especially to such machines wherein pour spout fitments are applied while the cartons are being processed thereon.

Forming, filling and sealing machines having pour spout applicators at one of the stations therealong are known. For example, GB-A-2,238,287 discloses an application station at which a rotatable mandrel or bar is provided, with the mandrel having a boss projecting therefrom. A pour spout is placed on the boss by external means; as a carton is indexed into the application station, the mandrel is turned in the direction of the carton travel into the open top of the carton, aligning the boss with an opening formed in a selected panel of the top closure of the carton; the boss and pour spout are moved laterally through the opening; the inner flanged end of the pour spout is secured, such as by ultrasonic welding, to the inner surface around the opening; and the boss is withdrawn from the opening and then turned out of the open top. An outer cap is attached to the pouring spout before assembly.

Other pour spout applicators are disclosed US-A-4,788,811, wherein a horizontally elongated pour spout fitment attaching turret is located upstream of the usual turret and radial mandrels on which the bottom end closure is folded and sealed. The fitment attaching turret includes a pusher at one station for pushing an open-ended package over a sucker device for holding a pour spout fitment and inserting it into an opening in a package top panel. The fitment attaching turret is then rotated to a second station where an anvil is axially received in the package and co-operates with an ultrasonic horn for sealing a flange of the fitment to the inner surface of the top panel.

US-A-4386926 discloses a bag-in-box arrangement wherein a fitment is attached to the bag which is then inserted through a hole in flap of the box, while both are in a collapsed state.

According to a first aspect of the present invention, there is provided apparatus comprising conveying means for advancing containers one after another along a path, an applicator arranged to apply fitments to walls of respective containers on said path one after another, and drive means arranged to drive said applicator, characterised in that a second applicator arranged to apply further fitments to walls of respective further containers on said path one after another is located at an interval along said path from the first-mentioned applicator, and said drive means is arranged to drive said second applicator substantially synchronously with the first-mentioned applicator, thereby to apply the individual first-mentioned fitments substantially simultaneously with respective ones of said further fitments.

According to a second aspect of the present invention, there is provided a method of applying fitments to walls of containers, comprising advancing the containers one after another along a path, and applying fitments to walls of respective containers on said path one after another, characterised by applying a set of individual fitments to a group of said containers along said path substantially simultaneously.

Owing to these two aspects of the present invention, the output rate of the apparatus can be increased.

According to a third aspect of the present invention, there is provided apparatus comprising conveying means for advancing open-ended containers one after another along a path, and an applicator for applying fitments to respective walls of respective open-ended containers, said applicator comprising a fitment-holding anvil displaceable to-and-fro between a fitment-receiving position in which a fitment is loaded onto said anvil and another position in which the fitment is applied to the wall of the container, supply means for supplying fitments to said anvil at said fitment-receiving position, and sealing means arranged to seal the fitment to the wall, the sealing means pressing the fitment against the anvil, characterised in that said anvil is displaced to-and-fro between said fitment-receiving position and said other position in a plane transverse to said path.

According to a fourth aspect of the present invention, there is provided a method of applying fitments to walls of open-ended containers, comprising advancing said containers one after another along a path, displacing a fitment-holding anvil to-and-fro between a fitment-receiving position and another position, supplying a fitment to said anvil while in its fitment-receiving position and displacing said anvil and thus said fitment from said fitment-receiving position to said other position, applying said fitment to said wall, and sealing said fitment to said wall by operating sealing means which presses said fitment against said anvil, characterised in that the displacing of said anvil to-and-fro between said fitment-receiving position and said other position is in a plane transverse to said path.

Owing to these two aspects of the present invention, one or more adjacent containers in the path can be operated upon simultaneously with the container being operated upon by the applicator, in other words it is possible to arrange that the applicator does not prevent simultaneous operations (of whatever kind) upon one or more adjacent containers. Thus, two or more applicators can operator simultaneously upon a group of two or more containers in a single lane.

In order that the invention may be clearly understood and readily carried into effect, reference will now be made, by way of example, to the accompanying drawings, in which:-
Figure 1 is a side elevational view of a forming, filling and sealing machine;
Figure 2 is an enlarged elevational view of a pour spout fitment applicator of the machine, taken from a plane of the line 2-2 in Figure 1 and looking in the direction of the arrows;
Figure 3 is a perspective view of a pour spout fitment;
Figure 4 is a perspective view of a finished carton; and
Figure 5 is a fragmentary side elevational view of a double-indexing, forming, filling and sealing machine.

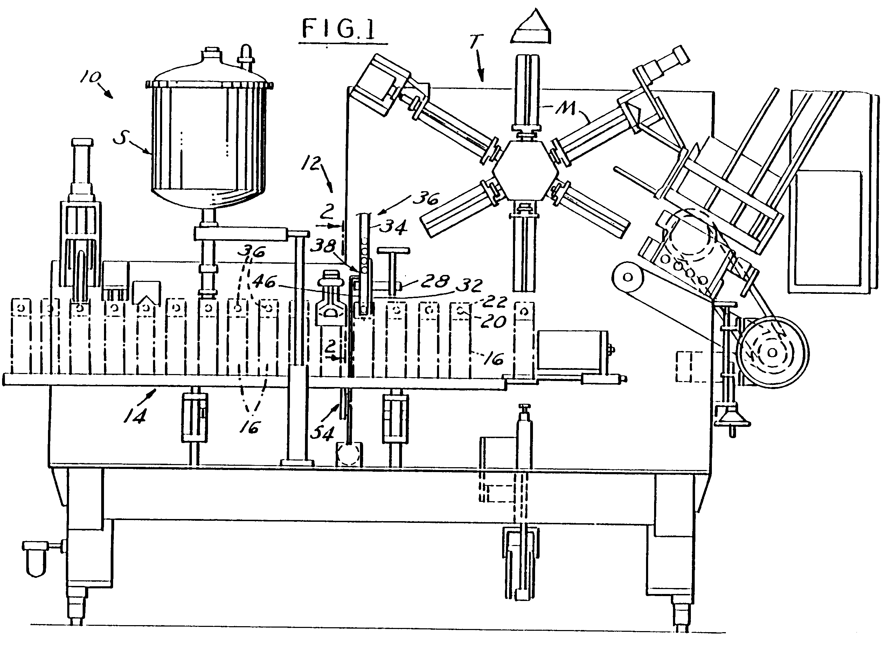

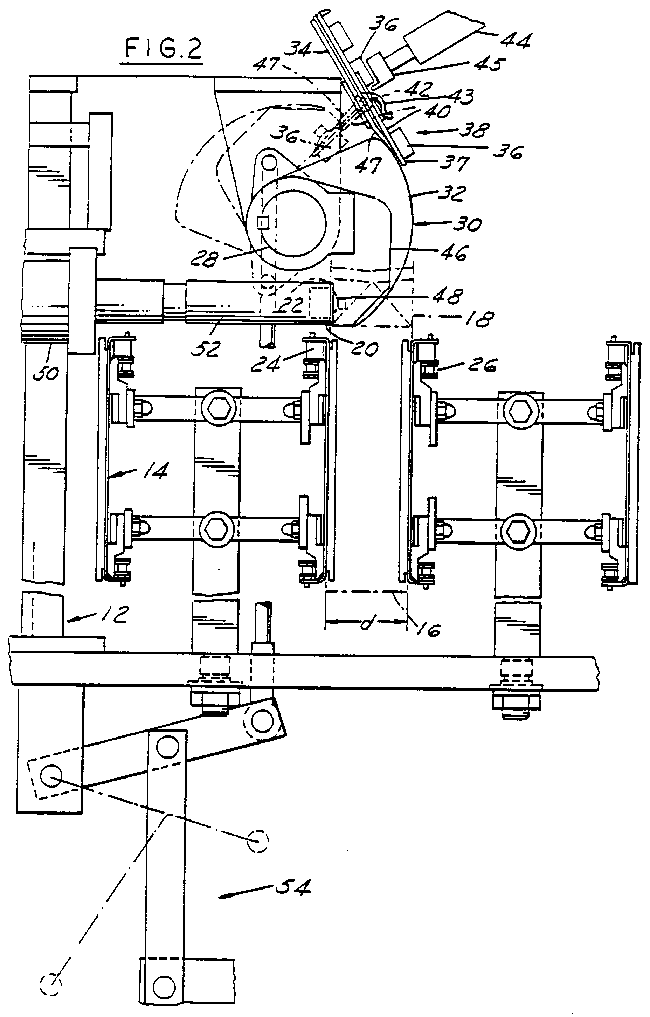

Referring now to the drawings in greater detail, Figures 1 and 2 illustrate a forming, filling and sealing machine 10 embodying a pour spout fitment applicator 12, and including a conveyor 14 carrying thermoplastic-coated cartons 16 having open-topped upper end closures 18. An opening 20 is formed in one panel 22 of each end closure 18. The applicator 12 is mounted on the machine 10 intermediate the usual indexable turret mechanism T including a plurality of mandrels M and the source S of a selected liquid.

As shown in Figure 2, the conveyor 14 comprises two endless chains 24 and 26 spaced a predetermined distance d apart, within which a series of closely spaced apart cartons 16 are carried, with the panel 22 bearing the opening 20 facing toward one of the chains 24.

The pour spout fitment applicator 12 includes a rotatable shaft 28 having a narrow cam 30 secured thereto. The cam 30 includes an outer arcuate surface 32. A chute 34 extends downwardly at a predetermined angle above the applicator 12. The chute 34 is adapted to hold a row of pour spout fitments 36 with flanges 37 thereon slidably aligned therein, as received from external loading means, such as a vibratory parts feeder (not shown), available from Syntron Co., Homer City, Pennsylvania, United States of America. Such a parts feeder automatically orients a load of fitments 36 and feeds them in their oriented attitude to the chute 34.

An escapement device 38 includes a segment 40 pivotally connected by a pivot pin 42 to the distal end of the chute 34. A spring 43 mounted around the pivot pin 42 urges the segment 40 clockwise about the pivot pin while the line-up of fitments 36 is retained in the chute 34. The escapement device 38 also includes any suitable release mechanism, such as a cylinder 44 and associated stop member 45, adapted to release one fitment 36 into the segment 40 each time the segment is returned to an aligned relationship with the chute 34, as will be explained. A retaining clip 47 holds a fitment 36 loosely in the segment 40.

An anvil 46 is also secured to the shaft 28 adjacent the cam 30. A vacuum cup 48 is mounted on the end portion of the anvil 46.

An ultrasonic sealer 50 includes a retractable horn 52 having an axis aligned with the opening 20 in the panel 22.

A typical linkage and toggle system, represented as 54, is operatively connected to the shaft 28, serving to reciprocally rotate same in unison with the indexing of the cartons 16 by the conveyor 14.

In operation, as a carton 16 begins to index into position below the applicator 12, the linkage and toggle system 54 rotates the shaft 28 in a counterclockwise direction in Figure 2, thereby rotating the anvil 46 and the cam 30 out of the carton path and such that the surface 32 is rotated past the segment 40. Once the distal end of the cam 30 moves past the segment 40, the spring 43 pivots the segment from the position shown in solid lines in Figure 2 to the position shown in phantom. Once in the latter position, the vacuum cup 48 on the end portion of the anvil 46 engages and receives the fitment 36 from the segment 40.

As the system 54 causes the cam 30 and anvil 46 to next rotate in a clockwise direction, the surface 32 urges the segment 40 against the force of the spring 43 back to the solid line position of Figure 2. The escapement device 38 now permits the next in line fitment 36 to drop into loading position in the segment.

Concurrently, the anvil 46 and vacuum cup 48 rotate the fitment 36 into the open top of the now indexed carton, as shown in Figure 2, to thereby project the fitment outwardly through the opening 20, and engage the flange 37 against the inner surface of the panel 22 around the opening. While the anvil is in position behind the fitment 36, the ultrasonic sealer 50 and retractable horn 52 move to the right in Figure 2, into contact with the outer surface of the panel 22 around the portion of the fitment 36 extended therethrough, where it serves to weld the flange 37 of the fitment to the inner surface of the panel 22, after which the horn retracts.

The cam 30 and anvil 46 are then rotated by the system 54 out of the open top closure 18 for the next cycle, and the cartons 16 are indexed forward toward the usual filling and top sealing stations of the forming, filling and sealing machine 10.

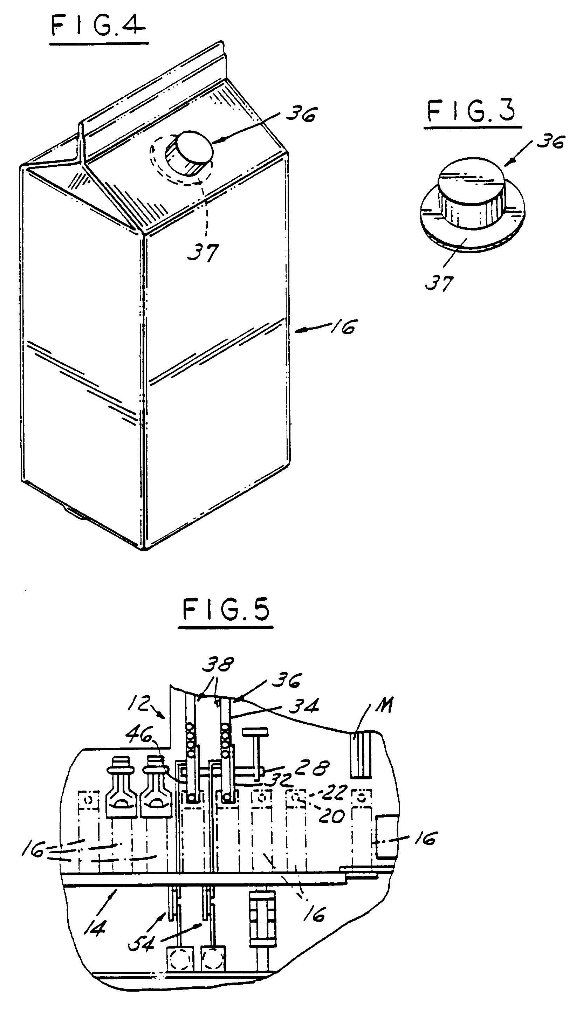

The applicator is particularly suitable for co-operation with an indexing conveyor of a high-production, forming, filling and sealing machine. For a machine which indexes closely arrayed cartons two or more at a time along one path, multiple applicators may be employed side-by-side to accommodate closely adjacent cartons. For such a machine, there would be dual or other multiple turrets or mandrels, or one turret and a single-to-dual indexing carton transfer mechanism and downstream multiple breakers, fillers, and sealers. Thus, as shown in Figure 5, owing to the applicator 12 operating in a plane transverse to the path of movement of the cartons through the machine 10, the above-described elements of the applicator and their operations may be duplicated for simultaneously applying fitments 36 to adjacent cartons 16 on a double indexing machine along a single lane, except that a single drive shaft 28 is employed to oscillate both sets of cams 30 and anvils 46. The interval between the applicators 12 is equal to the regular interval between the cartons 16.

## Claims

1. Apparatus comprising conveying means (14) for advancing containers (16) one after another along a path, an applicator (12) arranged to apply fitments (36) to walls (22) of respective containers (16) on said path one after another, and drive means (28) arranged to drive said applicator (12), characterised in that a second applicator (12) arranged to apply further fitments (36) to walls (22) of respective further containers (16) on said path one after another is located at an interval along said path from the first-mentioned applicator, and said drive means (28) is arranged to drive said second applicator (12) substantially synchronously with the first-mentioned applicator (12), thereby to apply the individual first-mentioned fitments (36) substantially simultaneously with respective ones of said further fitments (36).

2. Apparatus according to claim 1, wherein each applicator (12) comprises a fitment-holding anvil (46) displaceable to-and-fro between a fitment- receiving position in which a fitment (36) is loaded onto said anvil (46) and another position in which the fitment (36) is applied to the wall (22) of a container (16), supply means (38) for supplying fitments (36) to said anvil (46) at said fitment-receiving position, and sealing means (50) arranged to seal the fitment (36) to the wall (22), the sealing means (50) pressing the fitment (36) against the anvil (46) and the anvil (46) being displaceable to-and-fro between said fitment-receiving position and said other position in a plane transverse to said path.

3. Apparatus according to claim 1 or 2, wherein said conveying means (14) includes discrete container-receivers arranged at a regular interval therealong and the applicators (12) are arranged at an interval along said path substantially equal to said regular interval.

4. Apparatus according to claim 2, or claim 3 as appended to claim 2, wherein said drive means (28) is turningly oscillatory and is arranged to turn each anvil (46) between its fitment-receiving position and its other position, and wherein each said supply means (38) includes a chute (34) for alignedly receiving fitments (36), a pivotable end segment (40) of said chute (34) adapted to receive one fitment (36) at a time from said chute (34), biassing means (43) for urging said end segment (40) toward a fitment-holder (48) on the anvil (46), and an arcuate-shaped camming surface (32) of a cam (30) secured to said drive means (28) and adapted to return said end segment (40) to alignment with said chute (34) against the force of said biassing means (43) while said anvil (46) is being turned into the open-ended container (16).

5. Apparatus according to claim 4, wherein each said cam (30) and anvil (46) are secured side-by-side on said drive means (28) such that end portions thereof enter and leave such open-ended container (16) together.

6. Apparatus according to claim 2, 4, or 5, or claim 3 as appended to claim 2, wherein each said sealing means comprises an ultrasonic sealer (50) with retractable horn (52) adapted to engage a surface of said wall (22) while the anvil (46) is in place behind the fitment (36) thus to weld said fitment (36) to the opposite surface of said wall (22).

7. A method of applying fitments (36) to walls (22) of containers (16), comprising advancing the containers (16) one after another along a path, and applying fitments (36) to walls (22) of respective containers (16) on said path one after another, characterised by applying a set of individual fitments (36) to a group of said containers (16) along said path substantially simultaneously.

8. A method according to claim 7, wherein the fitments (36) are pour spouts (36) and the walls (22) of the containers (16) are top closure panels (22) of cartons (16) and wherein the fitments (36) are inserted into openings (20) in said panels (22).

9. A method according to claim 8, wherein said applying comprises displacing fitment-holding anvils (46) to-and-fro between respective fitment-receiving positions and other positions, supplying fitments (36) to said anvils (46) while in their fitment-receiving positions and displacing said anvils (46) and thus said fitments (36) from said fitment-receiving positions to said other positions, placing said fitments (36) on said walls (22), and sealing said fitments (36) to said walls (22) by operating sealing means (50) which presses said fitments (36) against said anvils (46), the displacing of said anvils (46) to-and-fro between said fitment-receiving positions and said other positions being in a plane transverse to said path.

10. Apparatus comprising conveying means (14) for advancing open-ended containers (16) one after another along a path, and an applicator (12) for applying fitments (36) to respective walls (22) of respective open-ended containers (16), said applicator (12) comprising a fitment-holding anvil (46) displaceable to-and-fro between a fitment-receiving position in which a fitment (36) is loaded onto said anvil (46) and another position in which the fitment (36) is applied to the wall (22) of the container (16), supply means (38) for supplying fitments (36) to said anvil (46) at said fitment-receiving position, and sealing means (50) arranged to seal the fitment (36) to the wall (22), the sealing means (50) pressing the fitment (36) against the anvil (46), characterised in that said anvil (46) is displaced to-and-fro between said fitment-receiving position and said other position in a plane transverse to said path.

11. Apparatus according to claim 10, and further comprising turningly oscillatory drive means (28) arranged to turn the anvil (46) between its fitment-receiving position and its other position, and wherein the supply means (38) includes a chute (34) for alignedly receiving fitments (36), a pivotable end segment (40) of said chute (34) adapted to receive one fitment (36) at a time from said chute (34), biassing means (43) for urging said end segment (40) toward a fitment-holder (48) on the anvil (46), and an arcuate-shaped camming surface (32) of a cam (30) secured to said drive means (28) and adapted to return said end segment (40) to alignment with said chute (34) against the force of said biassing means (43) while said anvil (46) is being turned into the open-ended container (16).

12. Apparatus according to claim 11, wherein the cam (30) and the anvil (46) are secured side-by-side on said drive means (28) such that end portions thereof enter and leave such open-ended container (16) together.

13. A method of applying fitments (36) to walls (22) of open-ended containers (16), comprising advancing said containers (16) one after another along a path, displacing a fitment-holding anvil (46) to-and-fro between a fitment-receiving position and another position, supplying a fitment (36) to said anvil (46) while in its fitment-receiving position and displacing said anvil (46) and thus said fitment (36) from said fitment-receiving position to said other position, applying said fitment (36) to said wall (22), and sealing said fitment (36) to said wall (22) by operating sealing means (50) which presses said fitment (36) against said anvil (46), characterised in that the displacing of said anvil (46) to-and-fro between said fitment-receiving position and said other position is in a plane transverse to said path.

14. A method according to claim 13, wherein the fitments (36) are pour spouts (36) and the walls (22) of the containers (16) are top closure panels (22) of cartons (16) and wherein the fitments (36) are inserted by the anvil (46) into openings (20) in said panels (22).

## Patentansprüche

1. Vorrichtung mit einer Fördereinrichtung (14) zum aufeinanderfolgenden Transportieren von Behältern (16) entlang eines Weges, einem Applikator (12) zum aufeinanderfolgenden Anbringen von Ansätzen (36) an Wänden (22) jeweiliger Behälter (16) auf dem Weg, und einer Antriebseinrichtung (28) zum Antreiben des Applikators (12), dadurch gekennzeichnet, daß ein zweiter Applikator (12), der zum aufeinanderfolgenden Anbringen von weiteren Ansätzen (36) an Wänden (22) jeweiliger weitere Behälter (16) auf dem Weg vorgesehen ist, entlang dem Weg mit einem Abstand zum erstgenannten Applikator angeordnet ist, und die Antriebseinrichtung (28) den zweiten Applikator (12) im wesentlichen synchron mit dem erstgenannten Applikator (12) antreibt, um so die einzelnen erstgenannten Ansätze (36) im wesentlichen gleichzeitig mit jeweiligen der weiteren Ansätze (36) anzubringen.

2. Vorrichtung nach Anspruch 1, bei der jeder Applikator (12) aufweist: einen Ansatzhalteamboß (46), der zwischen einer Ansatzaufnahmeposition, in der ein Ansatz auf den Amboß (46) geladen wird, und einer anderen Position, in der der Ansatz (36) an der Wand (22) eines Behälters (16) angebracht wird, vor und zurück bewegbar ist, eine Zuführeinrichtung (38) zum Zuführen von Ansätzen (36) zum Amboß (46) in der Ansatzaufnahmeposition, und eine Siegeleinrichtung (50) zum Siegeln des Ansatzes (36) an die Wand (22), wobei die Siegeleinrichtung (50) den Ansatz (36) gegen den Amboß (46) drückt und der Amboß (46) in einer quer zu dem Weg verlaufenden Ebene zwischen der Ansatzaufnahmeposition und der anderen Position vor und zurück bewegbar ist.

3. Vorrichtung nach Anspruch 1 oder 2, bei der die Fördereinrichtung (14) einzelne Behälteraufnahmeeinrichtungen aufweist, die entlang der Fördereinrichtung in regelmäßigem Abstand angeordnet sind, und die Applikatoren (12) in einem Abstand entlang dem Weg angeordnet sind, der im wesentlichen gleich dem regelmäßigen Abstand ist.

4. Vorrichtung nach Anspruch 2 oder Anspruch 3, auf Anspruch 2 rückbezogen, bei der die Antriebseinrichtung (28) drehend schwingt und jeden Amboß (46) zwischen dessen Ansatzaufnahmeposition und seiner anderen Position dreht, und bei derjede Zufuhreinrichtung (38) aufweist: eine Rutsche (34) zum ausgerichteten Aufnehmen von Ansätzen (36), ein schwenkbares Endsegment (40) der Rutsche (34) zum Aufnehmen jeweils eines Ansatzes (36) aus der Rutsche (34), eine Vorspanneinrichtung (43) zum Drücken des Endsegments (40) in Richtung auf einen Ansatzhalter (48) des Amboß (46), und eine gekrümmte Nockenfläche (32) eines Nockens (30), der an der Antriebseinrichtung (28) angebracht ist und das Endsegment (40) entgegen der Kraft der Vorspanneinrichtung (43) in Flucht mit der Rutsche (34) zurückstellt, während der Amboß (46) in den endseitig offenen Behälter (16) gedreht wird.

5. Vorrichtung nach Anspruch 4, bei dem jeder Nocken (30) und jeder Amboß (46) nebeneinander an der Antriebseinrichtung (28) derart befestigt sind, daß Endbereiche derselben zusammen in einen endseitig offenen Behälter (16) eindringen und diesen verlassen.

6. Vorrichtung nach Anspruch 2, 4 oder 5, oder Anspruch 3, sofern dieser auf Anspruch 2 bezogen ist, bei der jede Siegeleinrichtung eine Ultraschallsiegeleinrichtung (50) mit einem einziehbaren Horn (52) aufweist, das an einer Fläche der Wand (22) angreift, während der Amboß (46) sich hinter dem Ansatz (36) befindet um so den Ansatz (36) an die entgegengesetzte Fläche der Wand (22) anzuschweißen.

7. Verfahren zum Anbringen von Ansätzen (36) an Wänden (22) von Behältern (16), mit den Schritten des aufeinanderfolgenden Transportierens von Behältern (16) entlang eines Weges, und des aufeinanderfolgenden Anbringens von Ansätzen (36) an Wänden (22) jeweiliger Behälter (16) auf dem Weg, gekennzeichnet durch das im wesentlichen gleichzeitige Anbringen einer Gruppe von einzelnen Ansätzen (36) an eine Gruppe von Behältern (16) entlang des Weges.

8. Verfahren nach Anspruch 7, bei dem die Ansätze (36) Ausgießansätze (36) und die Wände (22) der Behälter (16) obere Verschlußplatten (22) von Kartons (16) sind, und bei dem die Ansätze (36) in Öffnungen (20) der Platten (22) eingesetzt werden.

9. Verfahren nach Anspruch 8, bei dem das Anbringen aufweist: das Vor- und Zurück-bewegen von Ansatzhalteambossen (46) zwischen einer Ansatzaufnahmeposition und einer anderen Position, das Zuführen von Ansätzen (36) zu den Ambossen (46) in der Ansatzaufnahmeposition, und das Verschieben der Ambosse (46), und damit der Ansätze (36), aus der Ansatzaufnahmeposition in die andere Position, das Anordnen der Ansätze (36) an den Wänden (22), und das Siegeln der Ansätze (36) an die Wände (22) durch eine Siegeleinrichtung (50), welche die Ansätze (36) gegen die Ambosse (46) drückt, wobei die Ambosse (46) in einer quer zu dem Weg verlaufenden Ebene zwischen der Ansatzaufnahmeposition und der anderen Position vor und zurück bewegt werden.

10. Vorrichtung mit einer Fördereinrichtung (14) zum aufeinanderfolgenden Transportieren von endseitig offenen Behältern (16) entlang eines Weges und einem Applikator (12) zum Anbringen von Ansätzen (36) an Wänden (22) jeweiliger endseitig offener Behälter (16), wobei der Applikator (12) aufweist: einen Ansatzhalteamboß (46), der zwischen einer Ansatzaufnahmeposition, in der ein Ansatz auf den Amboß (46) geladen wird, und einer anderen Position, in der der Ansatz (36) an der Wand (22) eines Behälters (16) angebracht wird, vor und zurück bewegbar ist, eine Zuführeinrichtung (38) zum Zuführen von Ansätzen (36) zum Amboß (46) in der Ansatzaufnahmeposition, und eine Siegeleinrichtung (50) zum Siegeln des Ansatzes (36) an die Wand (22), wobei die Siegeleinrichtung (50) den Ansatz (36) gegen den Amboß (46) drückt, dadurch gekennzeichnet, daß der Amboß (46) in einer quer zu dem Weg verlaufenden Ebene zwischen der Ansatzaufnahmeposition und der anderen Position vor und zurück bewegt wird.

11. Vorrichtung nach Anspruch 10, und ferner mit einer drehend schwingenden Antriebseinrichtung (28), die den Amboß (46) zwischen dessen Ansatzaufnahmeposition und seiner anderen Position dreht, und bei der die Zufuhreinrichtung (38) aufweist: eine Rutsche (34) zum ausgerichteten Aufnehmen von Ansätzen (36), ein schwenkbares Endsegment (40) der Rutsche (34) zum Aufnehmen jeweils eines Ansatzes (36) aus der Rutsche (34), eine Vorspanneinrichtung (43) zum Drücken des Endsegments (40) in Richtung auf einen Ansatzhalter (48) des Amboß (46), und eine gekrümmte Nockenfläche (32) eines Nockens (30), der an der Antriebseinrichtung (28) angebracht ist und das Endsegment (40) entgegen der Kraft der Vorspanneinrichtung (43) in Flucht mit der Rutsche (34) zurückstellt, während der Amboß (46) in den endseitig offenen Behälter (16) gedreht wird.

12. Vorrichtung nach Anspruch 11, bei der der Nocken (30) und der Amboß (46) nebeneinander an der Antriebseinrichtung (28) derart befestigt sind, daß Endbereiche derselben zusammen in einen endseitig offenen Behälter (16) eindringen und diesen verlassen.

13. Verfahren zum Anbringen von Ansätzen (36) an Wänden (22) von endseitig offenen Behältern (16), mit den Schritten des aufeinanderfolgenden Transportierens der Behälter (16) entlang eines Weges, des Vor- und Zurückbewegens eines Ansatzhalteambosses (46) zwischen einer Ansatzaufnahmeposition und einer anderen Position, des Zuführens eines Ansatzes (36) zum Amboß (46) in der Ansatzaufnahmeposition, und des Verschiebens des Ambosses (46), und damit des Ansatzes (36), aus der Ansatzaufnähmeposition in die andere Position, des Anbringens des Ansatzes (36) an der Wand (22), und des Siegelns des Ansatzes (36) an die Wand (22) durch eine Siegeleinrichtung (50), welche den Ansatz (36) gegen den Amboß (46) drückt, dadurch gekennzeichnet, daß der Amboß (46) in einer quer zu dem Weg verlaufenden Ebene zwischen der Ansatzaufnahmeposition und der anderen Position vor und zurück bewegt wird.

14. Verfahren nach Anspruch 13, bei dem die Ansätze (36) Ausgießansätze (36) und die Wände (22) der Behälter (16) obere Verschlußplatten (22) von Kartons (16) sind, und bei dem die Ansätze (36) durch die Ambosse (46) in Öffnungen (20) der Platten (22) eingesetzt werden.

## Revendications

1. Appareil comprenant des moyens de convoyage (14) pour faire avancer des récipients (16) l'un après l'autre le long d'un trajet, un applicateur (12) disposé pour appliquer des raccords (36) aux parois (22) de récipients (16) respectifs sur ledit trajet l'un après l'autre, et des moyens d'entraînement (28) disposés pour entraîner ledit applicateur (12), caractérisé en ce qu'un second applicateur (12) disposé pour appliquer des raccords supplémentaires (36) aux parois (22) de récipients supplémentaires (16) respectifs sur ledit trajet l'un après l'autre est placé à un intervalle le long dudit trajet par rapport à l'applicateur premièrement mentionné, et en ce que lesdits moyens d'entraînement (28) sont disposés pour entraîner ledit second applicateur (12) de manière sensiblement synchrone avec l'applicateur premièrement mentionné (12), de manière ainsi à appliquer les raccords individuels (36) premièrement mentionnés de manière sensiblement simultanée avec des raccords respectifs parmi lesdits raccords supplémentaires (36).

2. Appareil selon la revendication 1, dans lequel chaque applicateur (12) comprend une enclume de maintien de raccords (46) déplaçable en va-et-vient entre une position de réception de raccords dans laquelle un raccord (36) est chargé sur ladite enclume (46) et une autre position dans laquelle le raccord (36) est appliqué à la paroi (22) d'un récipient (16), des moyens d'amenée (38) pour fournir des raccords (36) à ladite enclume (48) au niveau de ladite position de réception de raccords, et des moyens de liaison étanche (50) disposés pour relier de manière étanche le raccord (36) à la paroi (22), les moyens de liaison étanche (50) pressant le raccord (36) contre l'enclume (46) et l'enclume (46) étant déplacable en va-et-vient entre ladite position de réception de raccords et ladite autre position dans un plan transversal audit trajet.

3. Appareil selon la revendication 1 ou 2, dans lequel lesdits moyens de convoyage (14) comprennent des récepteurs de récipients discrets disposés à un intervalle régulier le long de ceux-ci, et ou les applicateurs (12) sont disposés à un intervalle le long dudit trajet qui est sensiblement égal audit intervalle régulier.

4. Appareil selon la revendication 2, ou la revendication 3 dans sa dépendance de la revendication 2, dans lequel les moyens d'entraînement (28) tournent de manière oscillante et sont disposés pour faire tourner chaque enclume (46) entre sa position de réception de raccords et son autre position, et où chacun desdits moyens d'amenée (38) comprend une goulotte (34) pour recevoir de manière alignée des raccords (36), une partie d'extrémité pivotante (40) de ladite goulotte (34) étant adaptée à recevoir un seul raccord (36) à la fois en provenance de ladite goulotte (34), des moyens de sollicitation (43) pour pousser ladite partie d'extrémité (40) vers un organe de maintien de raccords (48) sur l'enclume (46), et une surface formant came arrondie (32) d'une came (30) fixée auxdits moyens d'entraînement (28) et adaptée pour rappeler ladite partie d'extrémité (40) en alignement avec l,adite goulotte (34) à l'encontre de la force desdits moyens de sollicitation (43) lorsque ladite enclume (46) est en train d'être tournée dans le récipient à extrémité ouverte (16).

5. Appareil selon la revendication 4, dans lequel ladite came (30) et ladite enclume (46) sont chacune fixées côte à côte sur lesdits moyens d'entraînement (28) de telle manière que leurs parties d'extrémité entrent et quittent ensemble un tel récipient à extrémité ouverte (16).

6. Appareil selon la revendication 2, 4 ou 5 ou la revendication 3 dans sa dépendance de la revendication 2, dans lequel chacun desdits moyens de liaison étanche comprend un organe (50) de liaison étanche à ultrasons présentant un cornet rétractable (52) adapté à s'engager avec une surface de ladite paroi (22) lorsque l'enclume (46) est en place derrière le raccord (36), pour souder ainsi ledit raccord (36) à la surface opposée de ladite paroi (22).

7. Un procédé d'application de raccords (36) aux parois (22) de récipients (16), comprenant l'opération consistant à faire avancer les récipients l'un après l'autre le long d'un trajet, et appliquer des raccords (36) aux parois (22) de récipients respectifs (16) sur ledit trajet l'un après l'autre, caractérisé par le fait d'appliquer une série de raccords individuels (36) à un groupe desdits récipients (16) le long dudit trajet de manière sensiblement simultanée.

8. Un procédé selon la revendication 7, dans lequel les raccords (36) sont des becs verseurs (36) et les parois (22) des récipients (16) sont des panneaux de fermeture supérieure (22) d'emballages en carton (16), et où les raccords (36) sont insérés dans des ouvertures (20) prévues dans lesdits panneaux (22).

9. Un procédé selon la revendication 8, dans lequel ladite opération d'application comprend le fait de déplacer des enclumes de maintien de raccords (46) en va-et-vient entre des positions de réception de raccords respectives et d'autres positions, amener des raccords (36) auxdites enclumes (46) lorsqu'elles se trouvent dans leurs positions de réception de raccords et déplacer lesdites enclumes (46) et ainsi lesdits raccords (36) depuis lesdites positions de réception de raccords jusqu'auxdites autres positions, placer lesdits raccords (36) sur lesdites parois (22), et relier de manière étanche lesdits raccords (36) auxdites parois (22) en actionnant lesdits moyens de liaison étanche (50) qui pressent lesdits raccords (36) contre lesdites enclumes (46), le déplacement desdites enclumes (46) en va-et-vient entre lesdites positions de réception de raccords et lesdites autres positions étant réalisé dans un plan transversal audit trajet.

10. Appareil comprenant des moyens de convoyage (14) pour faire avancer des récipients à extrémité ouverte (16) l'un après l'autre le long d'un trajet, et un applicateur (12) pour appliquer des raccords (36) aux parois respectives (22) de récipients à extrémité ouverte respectifs (16), ledit applicateur (12) comprenant une enclume de maintien de raccords (46) déplaçable en va-et-vient entre une position de réception de raccords dans laquelle un raccord (36) est chargé sur ladite enclume (46) et une autre position dans laquelle le raccord (36) est appliqué à la paroi (22) du récipient (16), des moyens d'amenée (38) pour fournir des raccords (36) à ladite enclume (46) au niveau de ladite position de réception de raccords et des moyens de liaison étanche (50) disposés pour relier de manière étanche le raccord (36) à la paroi (22), les moyens de liaison étanche (50) pressant le raccord (36) contre l'enclume (46), caractérisé en ce que ladite enclume (46) est déplacée en va-et-vient entre ladite position de réception de raccords et ladite autre position dans un plan transversal audit trajet.

11. Appareil selon la revendication 10, et comprenant en outre des moyens d'entraînement tournant de manière oscillante (28) disposés pour faire tourner l'enclume (46) entre sa position de réception de raccords et son autre position, et où les moyens d'amenée (38) comprennent une goulotte (34) pour recevoir de manière alignée des raccords (36), une partie d'extrémité pivotante (40) de ladite goulotte (34) étant adaptée à recevoir un seul raccord (36) à la fois en provenance de ladite goulotte (34), des moyens de sollicitation (43) pour pousser ladite partie d'extrémité (40) vers un organe de maintien de raccords (48) sur l'enclume (46), et une surface formant came arrondie (32) d'une came (30) fixée auxdits moyens d'entraînement (28) et adaptée pour rappeler ladite partie d'extrémité (40) en alignement avec ladite goulotte (34) à l'encontre de la force desdits moyens de sollicitation (43) lorsque ladite enclume (46) est en train d'être tournée dans le récipient à extrémité ouverte (16).

12. Appareil selon la revendication 11, dans lequel la came (30) et l'enclume (46) sont fixées côte à côte sur lesdits moyens d'entraînement (28) de telle manière que leurs parties d'extrémité entrent et quittent ensemble un tel récipient à extrémité ouverte (16).

13. Un procédé d'application de raccord (36) à des parois (22) de récipients à extrémité ouverte (16), comprenant l'opération consistant à faire avancer lesdits récipients (16) l'un après l'autre le long d'un trajet, déplacer une enclume de maintien de raccords (46) en va-et-vient entre une position de réception de raccords et une autre position amener un raccord (36) à ladite enclume (46) lorsqu'elle se trouve dans sa position de réception de raccords et déplacer ladite enclume (46) et ainsi ledit raccord (36) depuis ladite position de réception de raccords jusqu'à ladite autre position, appliquer ledit raccord (36) sur ladite paroi (22), et relier de manière étanche ledit raccord (36) à ladite paroi (22) en actionnant des moyens de liaison étanche (50) qui pressent ledit raccord (36) contre ladite enclume (46), caractérisé en ce que l'opération de déplacement de ladite enclume (46) en va-et-vient entre ladite position de réception de raccord et ladite autre position s'effectue dans un plan transversal audit trajet.

14. Un procédé selon la revendication 13, dans lequel lesdits raccords (36) sont des becs verseurs (36) et les parois (22) des récipients (16) sont des panneaux de fermeture supérieure (22) d'emballages en carton (16), et où les raccords (36) sont insérés par l'enclume (46) dans des ouvertures (20) prévues dans lesdits panneaux (22).
